# EUROPEAN PATENT SPECIFICATION

(11) **EP 1 953 974 B1**
(45) Date of publication and mention of the grant of the patent: **06.11.2013**
(21) Application number: 07002055.7
(22) Date of filing: 31.01.2007
(51) Int. Cl.: H04L 12/801, H04L 12/815, H04L 12/825, H04L 12/835

(54) **A packet transmission scheme for improved throughput over multi-hop routes of a wireless multihop network**
Ein Paketübertragungsschema zur verbesserten Durchlaufleistung über Multi-Hop-Verbindungen eines drahtlosen Multi-Hop-Netzwerks
Mécanisme de transmission de paquets pour améliorer le débit sur les routes à sauts multiples d'un réseau à sauts multiples sans fil

(43) Date of publication of application: 06.08.2008
(73) Proprietor: Deutsche Telekom AG, 53113 Bonn (DE)
(72) Inventor: Dousse, Olivier Dr., 10249 Berlin (DE)
(74) Representative: Kampfenkel, Klaus

(56) References cited:
- US-B1- 7 031 293
- PATHMASUNTHARAM J S ET AL: "A Flow Control Framework for Improving Throughput and Energy Efficiency in CSMA/CA based Wireless Multihop Networks" WORLD OF WIRELESS, MOBILE AND MULTIMEDIA NETWORKS, 2006. WOWMOM 2006. INTERNATIONAL SYMPOSIUM ON A BUFFALO-NIAGARA FALLS, NY, USA 26-29 JUNE 2006, PISCATAWAY, NJ, USA,IEEE, 26 June 2006 (2006-06-26), pages 143-149, XP010925859 ISBN: 0-7695-2593-8
- LIN C R ET AL: "REAL-TIME SUPPORT IN MULTIHOP WIRELESS NETWORKS" WIRELESS NETWORKS, ACM, NEW YORK, NY, US, vol. 5, no. 2, March 1999 (1999-03), pages 125-135, XP000825395 ISSN: 1022-0038

## Description

### Field of the Invention

The invention is directed in general to transmission mechanisms for multi-hop wireless networks that optimize throughput over multi-hop routes, mostly by mitigating self-interference and congestion. In particular, the invention concerns a method and a wireless multi-hop network for transmitting packets through a wireless multi-hop network as well as an intermediate node, also referred to as a relay node, for use within a wireless multi-hop network.

### Background of the Invention

Many multi-hop wireless networks have already been built, mostly using standard IEEE 802.11 equipment. One important requirement of such a multi-hop wireless network is to obtain an optimized throughput over the wireless links of a wireless multi-hop route. To obtain a good throughput is, however, crucial due to the fact that wireless links of the same network interfere with each other; this phenomenon is known as self-interference.

Current MAC (Medium Access Control) layer protocols, such as 802.11, implement a CSMA/CA (Carrier sensing multiple supposed to avoid packet collisions and ensure a fair sharing of the bandwidth among contending nodes. However, fair sharing is not an optimal policy in a multi-hop scenario. Ideally, nodes should have access to the channel exactly when they have a packet to send, namely after the successful reception of a packet to relay. Using a plain CSMA/CA protocol in a multi-hop network leads to two major problems:
- Queue building at relay nodes
   Relay nodes include a storage means which are adapted to store a plurality of packets. It is known, that some relay nodes have better connectivity than others, so that some links of a route become bottlenecks. In front of these bottlenecks, long queues of packets build up, resulting in very long end-to-end delay.
- Congestion
   Similarly as cars on a highway, the increasing density of packets along the route causes a congestion phenomenon. This phenomenon reduces the overall throughput dramatically.

A known way to increase the data throughput in a wireless multi-hop network is, for example, described by Srikrishna et al. in the US patent No. 7, 031,293 B1. This approach is based on a channel assignment schema for a node of a mesh network which uses several non-overlapping channels and assigns distinct channels to different links. This technique, however, requires that each node is equipped with at least two wireless interfaces, so that the node can receive packets on a first channel for a downlink and forward packets on a second channel for an uplink. It is however a well established fact that multiple wireless interfaces in the same device interfere significantly, even if they are working on non-overlapping channels.

In "A Flow Control Framework for Improving Throughput and Energy Efficiency in CSMA/CA based Wireless Multihop. Networks" by Pathmasuntharam J.S. et al., Proceedings of the 2006 International Symposium on a World of Wireless, Mobile and Multimedia Networks (WoWMoM'06), 2006, IEEE, pages 143-149, a flow control framework for a multihop wireless network based on CSMA/CA is described, wherein a hop-by-hop, hybrid window and rate-based flow control scheme is utilized. A RTS/CTS handshake is used, wherein when a sender node sends a RTS frame, the receiver has the option to send a RTS-NAK frame or a CTS frame. Upon receiving the RTS, the MAC layer consults the flow control module to check if the packet can be admitted into the node. If the flow violates the buffer occupancy rule, the MAC layer replies with a RTS-NAK frame to the sender node. The buffer occupancy rule is violated when a packet that belongs to the same flow exists in the receiving node. In order to spread packets it is described to implement a delay mechanism at each node.

Furthermore, in the PCT application no. WO 03/028315 A1 a method for multihop packet transmissions is disclosed. In this method a global state information is used to minimize delays for packet transmissions over a multihop route. In particular, a network allocation vector (NAV) is altered at each node of the route to reserve the route for the whole duration of the packet's trip from source to destination. Such a scheme clearly implies a great loss of throughput, as only one link is active at a time along the whole route.

### Summary of the Invention

It is an object of the present invention to provide a method and a wireless multi-hop network for improving the throughput over multi-hop routes of a wireless multi-hop network, in particular by using relay nodes having less equipment than the known relay nodes.

The object is solved by a method for transmitting packets through a wireless multi-hop network. The method comprises the steps of:
a) establishing a multi-hop route (10) between a first node (20) and a second node (40) using at least one intermediate node (30₁ to 30₂), wherein the first and second nodes are adapted to operate as a source and/or a destination node and wherein each intermediate node (30₁ to 30₂) is adapted to buffer a predetermined number N of packets, and wherein each intermediate node comprises a single radio interface (33) for transmitting and receiving packets via a wireless transmission channel;
b) determining at each node having a packet to transmit whether its adjacent node is an intermediate node (30₁ to 30₂) and, if so, whether said intermediate node (30₁ to 30₂) has stored N packets, wherein adjacent nodes are connected via a respective radio link;
c) transmitting a packet from the respective node having a packet to send to its adjacent intermediate node only if the respective intermediate node stores less than N packets, characterized by the steps of: dividing the established multi-hop route (10) into a plurality of groups of three adjacent nodes wherein adjacent groups share a common node and allocating each group of nodes one of two different, non-overlapping transmission channels (A, B), wherein adjacent groups of nodes are allocated different transmission channels (A, B) from the two different, non-overlapping transmission channels.
c) transmitting a packet from the respective node having a packet to send to its adjacent intermediate node only if the respective intermediate node stores less than N packets.

In order to reduce complexity and thus the costs of intermediate nodes used in the wireless multi-hop network the predetermined number N of packets which can oe stored in each intermediate node is one, so that a packet is only sent from one node to a receiving intermediate node, if there is no packet buffered.

The method leads to several really good properties.
The first and most important property is that congestion, if it occurs, do not imply an accumulation of packets at one node, but "freezes" the whole flow, as packets bump into each other. As a consequence, the congestion propagates quickly to the first node operating as a source, what allows any kind of flow control at the source directly. This propagation provides the same functionality as explicit back pressure messages. Therefore, from the viewpoint of network layers implemented in the intermediate nodes, the chain of intermediate nodes looks like a data pipe, with a single bottleneck at the entrance.

A second important property is that by keeping buffer extremely small, packet travel times can be reduced dramatically. This is a very important feature for real time applications. It is also useful to TCP flows, as TCP throughput is directly related to round-trip times. Furthermore, allowing for long queues at each node may even cause TCP timeouts.

In order to keep the transaction time for transmitting packets form a sending node to a receiving node constant, step b) is performed by using a handshake procedure on the basis of a MAC protocol, wherein each packet to send has a fixed size. Furthermore, use of fixed length packets enables self-organized synchronization, where all transmissions in the wireless multi-hop network start and end approximately at the same time.

In a preferred embodiment, the MAC protocol supports CSMA/CA.

Furthermore, the method allows packets to be transmitted in both directions along the establish route. This means, that forward packets are transmitted from the first node to the second node and backwards packets are transmitted from the second node to the first node. According to a preferred embodiment, transmission of packets between two adjacent intermediate nodes is performed
i) if one of the adjacent intermediate nodes has a forward packet to send and the other intermediate node has a backward packet to send,
ii) if one of the adjacent intermediate nodes has a forward packet to send and the other intermediate node has no packet stored, or
iii) if one of the adjacent intermediate nodes has a backward packet to send and the other intermediate node has no packet stored.

Therefore, the method enables to handle with bi-directional data flows without throughput loss. The self-organized synchronization allows backwards traffic to flow without interfering with forwards traffic. This feature is made possible by the packet/hole duality property of the method when packets have fixed size and the buffer of each intermediate node has size one. With other words, moving a packet one hop forwards is equivalent to move a hole backwards. Thus, we can easily fill holes with backwards traffic, and carry it without changing the way forwards packets are traveling.

In order to ensure a smooth flowing of packets the transaction time for exchanging packets between two adjacent nodes is kept constant.

In order to match the bi-directional traffic over the established route both the first and second nodes adjust the size of packets to send such that the transaction time for exchanging packets between two adjacent nodes is kept constant.

The packet transmission schema can be further improved by refraining a node which has currently sent a packet from sending a further packet during a predetermined time interval, i. e. for example the transaction time. This can be achieved, for example, by extending the network allocation vector (NAV) at the respective node. This rule allows to keep the appropriate spacing between forward packets, and makes packet flow in a stable non congested manner. The throughput in this case converges to the optimum of one third.

In the case where interferences between the noces are high, congestion and even collision in some cases become a difficult problem. To diminish route congestion and packet collision at high interferences the established multi-hop route is divided into a plurality of groups of three adjacent nodes, wherein adjacent groups share a common node and two different transmission channels are allocated adjacent groups of nodes.

The above mentioned technical problem is also solved by a wireless multi-hop network for transmitting packets over at least one multi-hop route. The wireless multi-hop network comprises at least one source node, at least one destination node and a plurality of intermediate nodes, wherein a source node, at least on intermediate node and a destination node are adapted to form a multi-hop route, wherein the multi-hop route is divided into a plurality of groups of three adjacent nodes wherein adjacent groups share a common node and each group of nodes is allocated one of two different, non-overlapping transmission channels, wherein adjacent groups of nodes are allocated different transmission channels. Furthermore, each intermediate node comprises:
- a storage for storing a predetermined number N of packets,
- a single radio interface for transmitting and receiving packets via a wireless transmission channel;
- means for communication with an adjacent intermediate node to determining whether the adjacent node is able to receive a packet; and
- means for transmitting a packet through the interface to the adjacent intermediate node only if the respective intermediate node stores less than N packets.

In order to reduce complexity and thus the costs of intermediate nodes used in the wireless multi-hop network the storage is adapted to only store a single packet, so that a packet is only sent an adjacent intermediate node, if there is no packet stored.

An intermediate node for use within a wireless multi-hop network comprises a storage for storing a predetermined number N of packets, a single radio interface for transmitting and receiving packets via a wireless transmission channel, means for communication with an adjacent intermediate node to determining whether the adjacent node is able to receive a packet and means for transmitting a packet through the interface to the adjacent intermediate node only if the respective intermediate node stores less than N packets.

The intermediate node as set forth uses a buffering policy according to which it can only store a single packet.

In particular, the intermediate nodes according to the invention are essentially self-organized and the method is optimized for heavy data flows traveling along a multi-hop route, where nodes can only hear each other if they are a couple of hops away from each other.

### Brief Description of the Drawings

The invention, together with its objects and the advantages thereof, may be best understood by reference to the following description taken in conjunction with the accompanying drawings in which:
- Fig. 1: depicts a multi-hop route comprising relay nodes according to the present invention,
- Fig. 2A: depicts a diagram of a one way transaction between two relay nodes,
- Fig. 2B: depicts a diagram of a two-way transaction between two relay nodes,
- Fig. 3: depicts an exemplary packet flow over the multi-hop route shown in Fig. 1, and
- Fig. 4: depicts an exemplary channel allocation schema applied to the multi-hop route shown in Fig. 1.

### Detailed Description of the Invention

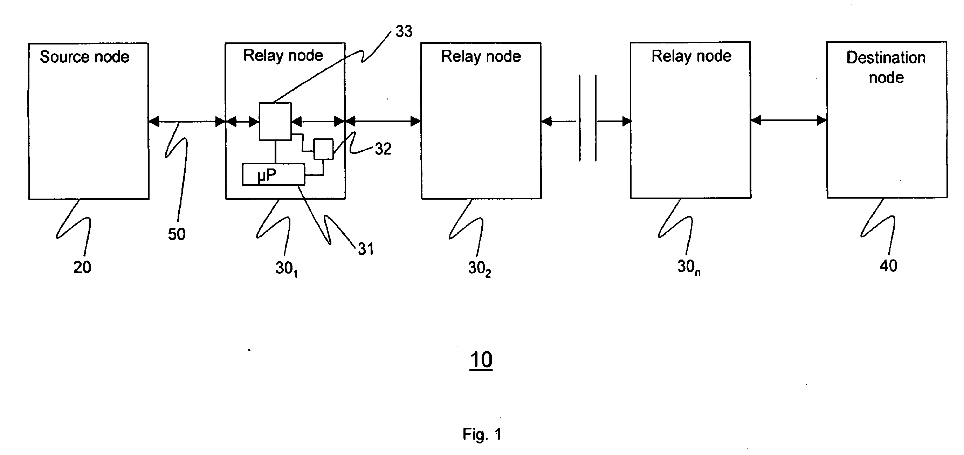

Regarding Fig. 1, we assume that a multi-hop route 10 has been established in a wireless multi-hop network by performing for example a known routing protocol, so that each packet flow follows that predefined route. The established multi-hop route 10 comprises a source node 20, a chain of intermediate nodes, also called relay nodes 30₁ to 30ₙ as well as a destination node 40. Adjacent nodes are connected via a respective radio link 50. It is to be understood, that the wireless multi-hop network may comprise a plurality of source nodes, destination nodes and relay nodes, which can participate to different routes. Our goal is to transmit data as fast as possible along this route 10.

In a preferred scheme, scheduling of packet exchanges and more generally synchronization and agreement is kept localized. This means, that the relay nodes 30₁ to 30ₙ only keep in touch with their neighbors, and do not keep track of any global state of the route 10. However, some global organization is necessary to reach optimal throughput. A central feature of the preferred scheme is that the system as a whole spontaneously converges to a globally synchronized stable state, by the means of local interactions between adjacent nodes only. Thus, if multi-hop route 10 disrupts, it will automatically recover its synchronized state while using purely self-organized relay nodes. In the preferred wireless multi-hop network, each relay node can only communicate with the previous and the next relay node. For example, relay node 30₂ ia able to communicate with relay node 30₁ and relay node 30₄ (not shown).

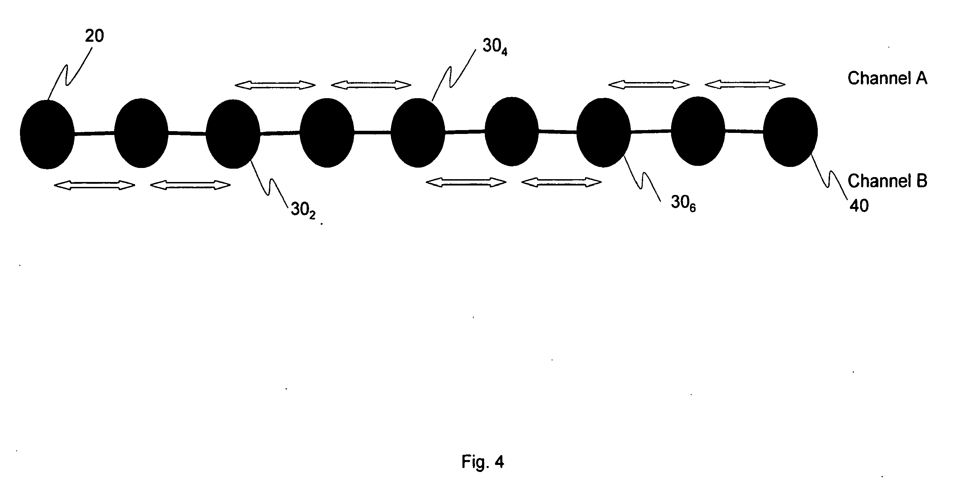

In the preferred embodiment as shown in Fig. 1, the multi-hop route 10 uses a single channel for transmitting packets in both direction, i.e. from the source node 20 via the relay nodes 30₁ to 30ₙ to the destination node 40 and vice versa. As will be described later in connection with Fig. 4, a two channel schema can also be used with respect to route 10 to transmit data in one or both directions. In both cases, each relay node 30₁ to 30ₙ comprises only a single wireless interface 33 to receive and transmit a packet from and to one of its adjacent nodes.

Moreover, each relay node 30₁ to 30ₙ may comprise a memory, used as a buffer 32. The buffer 32 is adapted to never buffer more than one packet. Furthermore, each relay node 30₁ to 30ₙ comprises a programmable control unit 31, in Fig. 1 termed as a microprocessor, which is programmed to allow transmissions to an receiving relay node only if the receiving relay node has no packet in its buffer 32. This method we call no-buffering policy.

To enable the self-organizing property for the nodes in conjunction with the no-buffering policy, the MAC layer of each node, including source node 20, destination node 40 and the relay nodes 30₁ to 30ₙ, generates MAC layer frames having fixed sizes. The fixed length MAC layer frames are referred to herein also as packets. Contrary tc existing protocols, we relax the constraint that network layer packets sizes must correspond to MAC layer frame sizes. Instead, the nodes shown in Fig. 1 send constant sized MAC frames, and fill them with network layer packets appropriately.

The operation of the wireless multi-hop network as schematically shown in Fig. 1 is now described ir detail.

It is assumed, that source node 20 buffers packets determined for destination node 40 and that destination node 40 may buffer packets determined for source node 20.

As explained above, we do not address the routing problem in wireless multi-hop networks. Instead, it is assumed that some routing algorithm prescribes the single route 10 between the source node 20, the relay nodes 30₁ to 30ₙ and the destination node 40, and that these nodes exchange data. The relay nodes with smaller index numbers are closer to the source node along the route 10. For the sake of simplicity, we call node 20 source node and node 40 destination node, although some data may also travel from destination node 40 to source node 20. Traffic from source node 20 to destination node 40 is called forwards traffic, respectively forwards packets and traffic from destination node 40 to source node 20 - typically such as acknowledgements or application layer control packets - is called backwards traffic, respectively backwards packets. Sometimes for convenience, we will refer to the source node 20 as node 0 and to the destination node 40 as node n+1. Source node 20, relay nodes 30₁ to 30ₙ and destination node 40 in sequence form the multi-hop route 10.

### Physical layer modeling

We first describe the condition in which the network should operate, and the assumptions we make on the connectivity of the multi-hop route 10.

The first assumption is that the topology of the route 10 is such that node i, for example relay node 30₂ can only exchange data with node i-1, for example relay node 30₁ and node i+1, for example relay node 30₄ (not shown), for all 1≤i≤n, wherein the source node 20 can only exchange data with relay node 30₁ and the destination node 40 with relay node 30ₙ). The motivation for this assumption is that if node i can transmit directly to node i+2, the route 10 should be modified and node i+1 skipped.

However, it is assumed that nodes that cannot exchange data might still interfere with each other. To model interference, we introduce a parameter 1, which is the smallest integer such that for all 0≤i and j≤n+1, |i-j|>l implies that node i does not interfere with node j. This means that if node i is emitting packets, node j will still be able to receive data from any of its neighbors.

### Requirement on the MAC layer protocol

This invention does not cover the actual implementation of a MAC protocol realizing the proposed method. Instead, we give a list of requirements that the MAC protocol might fulfill so that the method works properly.

First, we assume that the MAC protocol in each node is of CSMA/CA type, and keeps the frame collision probability low, despite the fact that hidden terminal problems may occur in the topology described above. This condition is typically realized by implementing a RTS/CTS handshake.

Second, we assume that the MAC protocol enforces the no-buffering policy. This means that a packet transmission should only be allowed if the buffer of a receiving node is empty.

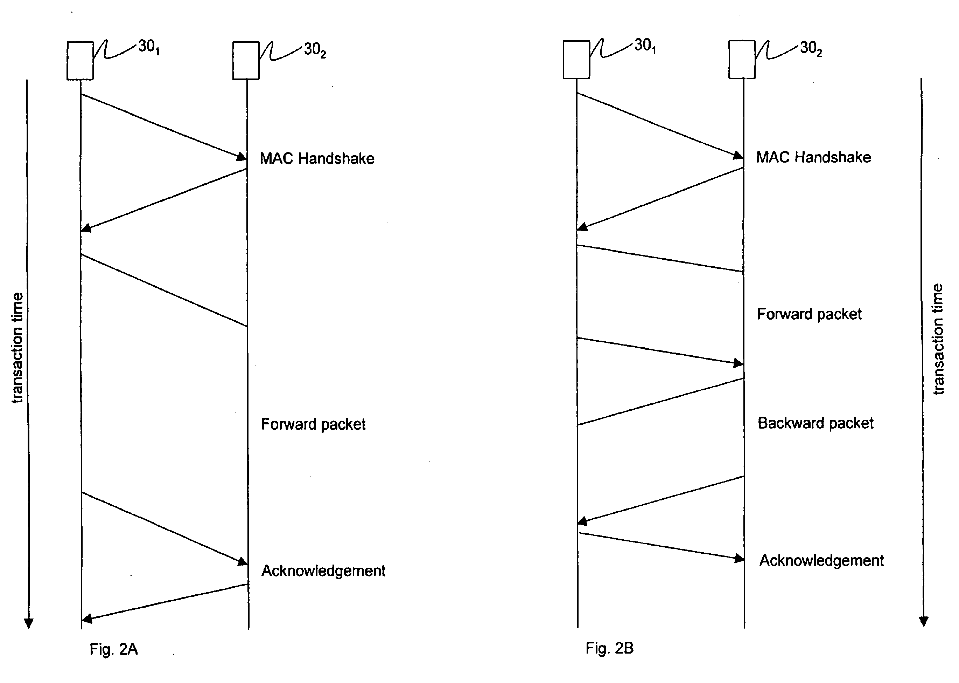

Finally, we assume that all data frames in the MAC protocol have the same size. Frames sizes for forward and backward traffic might be different though, as explained in connection with Fig. 2B. We also assume that control frames such as RTS, CTS, ACK and alike packets are small compared to data packets.

### One way traffic

In the case where data travels only from source node 20 to destination node 40, the network works as follows. Relay nodes 30₁ to 30ₙ maintain a buffer 32 of size equal to one packet, except the source node 20 and destination node 40. The source node 20 receives data to send from the network layer, stores them in its buffer (not shown), and arrange them into fixed size MAC layer frames, called hereafter packets. It is important to keep in mind that all packets have the same size.

The transmission of these packets is performed using a MAC protocol satisfying the above rules. The fixed packet size and the no-buffering policy is enough to ensure a smooth flowing of the packets.

Fig. 2A shows exemplary the flow of control and data packets between relay nodes 30₁ and 30₂ during a forwards traffic flow from source node 20 to destination node 40. It is assumed, that relay node 30₁ buffers a single data packet.

First, a MAC handshake is performed between both relay node 30₁ and 30₂ to enable relay node 30₁ to decide whether or not it can forward a buffered packet to relay node 30₂. If relay node 30₂ indicates to relay node 30₁ that its buffer 32 (not shown) is empty, rely node 30₁ sends its single data packet to relay node 30₂. Finally, relay node 30₂ acknowledges receipt of the data packet. Since all packets exchanged between relay node 30₁ and relay node 30₂ have the same size the transaction time is kept constant. In a similar manner, all data packets stored at the source node 20 travel to destination node 40.

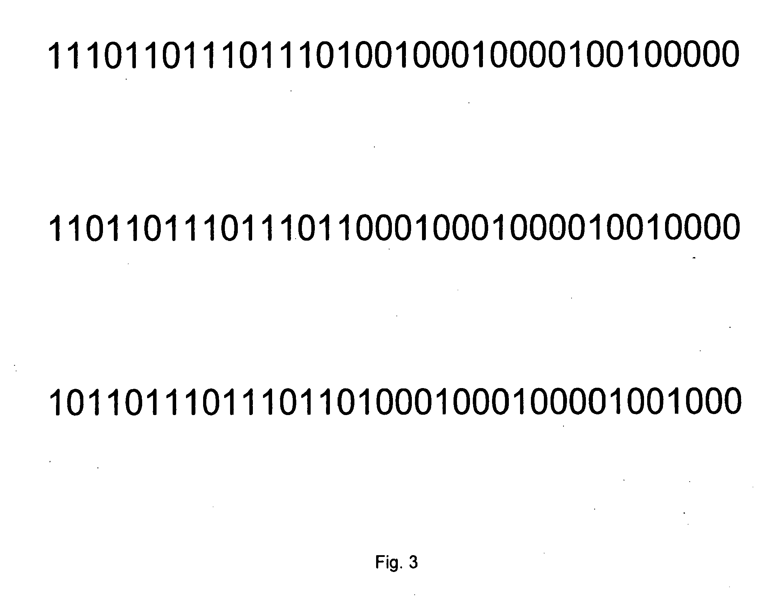

Fig. 3 shows an exemplary packet flow from a source node via 34 relay nodes to a destination node, wherein an empty buffer of a node is denoted with "0" and a buffer storing a single packet is denoted with "1". Each node having a single data packet to forward determines, as described above, whether its directly preceding node has an empty buffer. If so, the respective node forwards its packet. Three successive steps of the packet flow are depicted by the rows of Fig. 3.

### Bi-directional traffic

If the source node 20 has data to send to the destination node and vice-versa, the following method is adopted. Source node 20 and destination node maintain a common direction ratio Θ, that takes values between zero and one, and a large buffer adapted to store a plurality of packets. A direction ratio of ½ means that the size of forward packets sent from the source node 20 to the destination node 40 is identical to the size of backward packets sent form the destination node 40 to the source node 20. As illustrated above, all relay nodes 30₁ to 30ₙ comprises a one packet buffer 32, but this buffer has now three possible states: either it's empty, either it contains a forward packet if located at the source node 20, or it contains a backward packet, if located at the destination node 40. In general, the ratio between the forward packets' size and the backward packets' size is exactly Θ/1-Θ. Therefore, the total transaction time of both forward and backward packets together is preferably constant, regardless of the value of Θ. The extreme cases where Θ =1 or Θ=0 correspond the one-way traffic case. A packet transaction between a node i, for example node 30₁, and a node i+1, for example node 30₂, may occur in three cases:
1.If node i has a forward packet in its buffer 32 and node i+1 a backward packet.
2.If node i has a forward packet in its buffer 32 and node i+1 has no packet
3.If node i has no packet in its buffer 32 and node i+1 a backward packet.

In order to determine whether node i, e. g. relay 30₁ and/or node i+1, e. g. relay node 30₂ may exchange a forward and backward packet, respectively, MAC handshake packets are exchanged between them as shown in Fig. 2B.

In all three cases, the transaction of forward and/or backward packets occurs exactly in the same way: node i send it forward packet to node i+1, if any, and node i+1 send it backward packet, if any, to node i. However, the total time of the transaction must be kept constant. This can be done by sending empty frames when no packet is to be sent, or by adjusting the network allocation vector to this constant value. In this manner, each transaction between two consecutive nodes, e. g. relay nodes 30₁ and 30₂, consist in swapping forward and backward packets or an empty space is provided if a forward or backward packet is missing. An exemplary transaction between relay nodes 30₁ and 30₂ is shown in Fig. 2B. Since, for example, both relay nodes have a packet to send according to case 1, the routing algorithm used causes firstly relay node 30₁ to send its forward packet to relay node 30₂ and then relay node 30₂ to send its backward packet to relay node 30₁. Finally, the transaction is finished with sending an acknowledge packet from relay node 30₁ to relay node 30₂. It is to be noted that all nodes are controlled by a programmable controlling unit as shown in connection with relay node 30₁ in Fig. 1.

During packet transmission the source node 20 and the destination node 40 can adjust their ratio Θ if it does not match the traffic offered. The exact algorithm to adjust this value is out of the scope of this invention, but we give some guidelines that the algorithm should follow: if the source node 20 or the destination node 40 runs out of data to send, but still receives data from the other side, it decreases or increases its value of Θ, i.e. it decreases or increases the size of its packets. Then, as smaller or larger packets arrive at the other side, the opposite end node can increase and decrease , respectively, its packet size, i.e adjust its ratio Θ, to complement the opposite packets and fill the transactions.

### Traffic Flow with l=1

In cases where *l*=1, letting the packets flow on a single channel leads to a congested situation as shown for example on Fig. 3, but still performs pretty well. Theory predicts a throughput close to one fourth of the nominal bandwidth of the channel. Compared to the optimal throughput of a multi-hop route that is equal to one third in this case, implementing a method on a single channel is a reasonable embodiment in terms of performance. The advantage of this embodiment is its extreme simplicity.

Although the above method performs well, one can improve it by adding a new rule to the MAC protocol. It is assumed that node i has sent a packet to node i+1. After completing a transaction with node *i*+1, node i refuses transactions with node *i*-1 during a period equal to the duration of one transaction. This can be achieved for example by extending the network allocation vector (NAV).

This rule allows to keep the appropriate spacing between forward packets, and makes packet flow in a stable non congested manner. The throughput in this case converges to the optimum of one third.

### Packet Transmission over Two Channels

In the case where interferences are high, congestion and even collision in some cases become a difficult problem. A solution consists in using two different, non-overlapping transmission channels as shown in Fig. 4. Fig. 4 is similar to Fig. 1 and depicts a multi-hop route which comprises the source node 20 seven relay nodes 30₁ to 30₇ and the destination node 40. An exemplary channel assignment to groups of nodes is as follows: Packet transactions between nodes 20, 30₁ and 30₂ occurs on the first channel B, transaction between nodes 30₂, 30₃ and 30₄ occurs on the second channel A, packet transactions between nodes 30₄, 30₅ and 30₆ occurs one the first channel B again, and so on. Thus, relay nodes with an even index number have to switch from the first channel to the second channel and vice versa depending on the transaction they are currently performing. It is to be noted, that in a preferred embodiment each node have only one radio interface and is adapted to send both forward and backwards packets.

The main property of this scheme is that there is no congestion phenomenon if l=2. This is due to the fact that transmissions never interfere with each other, even though only two channels are used. Therefore, the throughput of this scheme is always optimal, and is equal to one half of the nominal capacity of a channel.

## Claims

1. A method for transmitting packets through a wireless multi-hop network, comprising the steps of:
a) establishing a multi-hop route (10) between a first node (20) and a second node (40) using at least one intermediate node (30₁ to 30₂), wherein the first and second nodes are adapted to operate as a source and/or a destination node and wherein each intermediate node (30₁ to 30₂) is adapted to buffer a predetermined number N of packets, and wherein each intermediate node comprises a single radio interface (33) for transmitting and receiving packets via a wireless transmission channel;
b) determining at each node having a packet to transmit whether its adjacent node is an intermediate node (30₁ to 30₂) and, if so, whether said intermediate node (30₁ to 30₂) has stored N packets, wherein adjacent nodes are connected via a respective radio link;
c) transmitting a packet from the respective node having a packet to send to its adjacent intermediate node only if the respective intermediate node stores less than N packets, **characterized by** the steps of: dividing the established multi-hop route (10) into a plurality of groups of three adjacent nodes wherein adjacent groups share a common node and allocating each group of nodes one of two different, non-overlapping transmission channels (A, B), wherein adjacent groups of nodes are allocated different transmission channels (A, B) from the two different, non-overlapping transmission channels.

2. The method of claim 1,
wherein the predetermined number N of packets is one, so that a packet is only sent to an intermediate node, if there is no packet stored.

3. The method of claim 1 or 2, wherein step b)) is performed by using a handshake procedure on the basis of a MAC protocol and wherein each packet to send has a fixed size.

4. The method of claim 3, wherein the MAC protocol supports CSMA/CA.

5. The method according to any one of the preceding claims, wherein forward packets are transmitted from the first node (20) to the second node (40) and backwards packets are transmitted from the second node (40 to the first node (20), the method comprising the steps of:
transmission of packets between two adjacent intermediate nodes (30₁ to 30₂) is performed
i) if one of the adjacent intermediate nodes has a forward packet to send and the other intermediate node has a backward packet to send,
ii) if one of the adjacent intermediate nodes has a forward packet to send and the other intermediate node has no packet stored, or
iii) if one of the adjacent intermediate nodes has a backward packet to send and the other intermediate node has no packet stored.

6. The method of claim 5, wherein the transaction time for exchanging packets between two adjacent nodes is constant.

7. The method of claim 6, comprising the step of adjusting at the first and second nodes (20, 40) the respective fixed size of packets to send such that the transaction time for exchanging packets between two adjacent nodes is kept constant.

8. The method according to one of the claims 1 to 7, wherein a node which has sent a packet refrains from sending a further packet during a predetermined time interval.

9. The method of claim 8, wherein the time interval is set to the transaction time.

10. A wireless multi-hop network for transmitting packets over at least one multi-hop route (10), comprising at least one source node (20), at least one destination node (40) and a plurality of intermediate nodes (30₁ to 30₂), wherein a source node (20), at least on intermediate node (30₁ to 30₂) and a destination node (30) are adapted to establish a multi hop route (10),
each intermediate node (30₁ to 30₂) comprising:
- a storage (32) for storing a predetermined number N of packets,
- a single radio interface (33) for transmitting and receiving packets via a wireless transmission channel;
- means (31) for communication with an adjacent intermediate node to determining whether the adjacent node is able to receive a packet, wherein adjacent nodes are connected via a respective radio link; and
- means for transmitting a packet through the interface (33) to the adjacent intermediate node only if the respective intermediate node stores less than N packets, **characterized in that**
the multi-hop route (10) is divided into a plurality of groups of three adjacent nodes wherein adjacent groups share a common node and
each group of nodes is allocated one of two different, non-overlapping transmission channels (A, B), wherein adjacent groups of nodes are allocated different transmission channels (A, B) from the two different, non-overlapping transmission channels.

11. The wireless multi-hop network of claim 10, wherein the storage (32) is adapted to only store a single packet, so that a packet is only sent to the intermediate node, if there is no packet stored.

## Patentansprüche

1. Verfahren zum Übertragen von Paketen über ein drahtloses Multi-Hop-Netzwerk, welches folgende Schritte umfasst:
a) Aufbauen einer Multi-Hop-Verbindung (10) zwischen einem ersten Knoten (20) und einem zweiten Knoten (40) unter Nutzung mindestens eines zwischenknotens (30₁ bis 30₂), wobei der erste und der zweite Knoten dazu angepasst sind, als ein Quell- und/oder ein Zielknoten zu arbeiten, und wobei jeder Zwischenknoten (30₁ bis 30₂) dazu angepasst ist, eine vorgegebene Anzahl N von Paketen zwischenzuspeichern, und wobei jeder Zwischenknoten eine einzige Funkschnittstelle (33) zum Senden und Empfangen von Paketen über einen drahtlosen Übertragungskanal umfasst;
b) Bestimmen, an jedem Knoten, der ein Paket zu übertragen hat, ob dessen benachbarter Knoten ein Zwischenknoten (30₁ bis 30₂) ist, und wenn ja, ob in dem zwischenknoten (30₁ bis 30₂) N Pakete gespeichert sind, wobei benachbarte Knoten über eine jeweilige Funkverbindung verbunden sind;
c) Senden eines Pakets von dem jeweiligen Knoten, der ein Paket zu senden hat, zu dem diesem benachbarten Zwischenknoten nur dann, wenn in dem jeweiligen Zwischenknoten weniger als N Pakete gespeichert sind, **gekennzeichnet durch** folgende Schritte:
Unterteilen der aufgebauten Multi-Hop-Verbindung (10) in eine Mehrzahl von Gruppen aus drei benachbarten Knoten, wobei benachbarte Gruppen einen gemeinsamen Knoten haben, und Zuordnen eines von zwei unterschiedlichen, nicht überlappenden Übertragungskanälen (A, B) zu jeder Gruppe von Knoten, wobei benachbarten Gruppen von Knoten unterschiedliche Übertragungskanäle (A, B) von den zwei unterschiedlichen, nicht überlappenden Übertragungskanälen zugeordnet werden.

2. Verfahren nach Anspruch 1, wobei die vorgegebene Anzahl N von Paketen Eins ist, so dass ein Paket nur dann zu einem Zwischenknoten gesendet wird, wenn dort kein Paket gespeichert ist.

3. Verfahren nach Anspruch 1 oder 2, wobei Schritt b) unter Verwendung einer Handshake-Prozedur auf der Grundlage eines MAC-Protokolls ausgeführt wird und wobei jedes zu sendende Paket eine feste Größe aufweist.

4. Verfahren nach Anspruch 3, wobei das MAC-Protokoll CSMA/CA unterstützt.

5. Verfahren nach einem der vorhergehenden Ansprüche, wobei Vorwärtspakete von dem ersten Knoten (20) zu dem zweiten Knoten (40) übertragen werden und Rückwärtspakete von dem zweiten Knoten (40) zu dem ersten Knoten (20) übertragen werden, wobei das Verfahren folgende Schritte umfasst:
die Übertragung von Paketen zwischen zwei benachbarten Zwischenknoten (30₁ bis 30₂) wird ausgeführt,
i) wenn einer der benachbarten Zwischenknoten ein Vorwärtspaket zu senden hat und der andere Zwischenknoten ein Rückwärtspaket zu senden hat,
ii) wenn einer der benachbarten Zwischenknoten ein Vorwärtspaket zu senden hat und der andere Zwischenknoten kein Paket gespeichert hat, oder
iii) wenn einer der benachbarten Zwischenknoten ein Rückwärtspaket zu senden hat und der andere Zwischenknoten kein Paket gespeichert hat.

6. Verfahren nach Anspruch 5, wobei die Transaktionszeit zum Austausch von Paketen zwischen zwei benachbarten Knoten konstant ist.

7. Verfahren nach Anspruch 6, welches den Schritt umfasst, an dem ersten und dem zweiten Knoten (20, 40) die jeweilige feste Größe von zu sendenden Paketen so anzupassen, dass die Transaktionszeit zum Austausch von Paketen zwischen zwei benachbarten Knoten konstant gehalten wird.

8. Verfahren nach einem der Ansprüche 1 bis 7, wobei ein Knoten, der ein Paket gesendet hat, während einer vorgegebenen zeitspanne auf das Senden eines weiteren Pakets verzichtet.

9. Verfahren nach Anspruch 8, wobei die Zeitspanne auf die Transaktionszeit festgesetzt ist.

10. Drahtloses Multi-Hop-Netzwerk zur Übertragung von Paketen über mindestens eine Multi-Hop-Verbindung (10), umfassend:
mindestens einen Quellknoten (20), mindestens einen Zielknoten (40) und eine Mehrzahl von Zwischenknoten (30₁ bis 30₂), wobei ein Quellknoten (20), mindestens ein Zwischenknoten (30₁ bis 30₂) und ein Zielknoten (40) dazu angepasst sind, eine Multi-Hop-Verbindung (10) aufzubauen,
wobei jeder Zwischenknoten (30₁ bis 30₂) umfasst:
- einen Speicher (32) zum Speichern einer vorgegebenen Anzahl N von Paketen,
- eine einzige Funkschnittstelle (33) zum Senden und Empfangen von Paketen über einen drahtlosen Übertragungskanal;
- Einrichtungen (31) zur Kommunikation mit einem benachbarten Zwischenknoten, um festzustellen, ob der benachbarte Knoten in der Lage ist, ein Paket zu empfangen, wobei benachbarte Knoten über eine jeweilige Funkverbindung verbunden sind; und
- Einrichtungen zum Senden eines Pakets über die Schnittstelle (33) zu dem benachbarten zwischenknoten nur dann, wenn in dem jeweiligen Zwischenknoten weniger als N Pakete gespeichert sind, **dadurch gekennzeichnet, dass**
die Multi-Hop-Verbindung (10) in eine Mehrzahl von Gruppen aus drei benachbarten Knoten unterteilt ist, wobei benachbarte Gruppen einen gemeinsamen Knoten haben, und
jeder Gruppe von Knoten einer von zwei unterschiedlichen, nicht überlappenden Übertragungskanälen (A, B) zugeordnet ist, wobei benachbarten Gruppen von Knoten unterschiedliche Übertragungskanäle (A, B) von den zwei unterschiedlichen, nicht überlappenden Übertragungskanälen zugeordnet sind.

11. Drahtloses Multi-Hop-Netzwerk nach Anspruch 10, wobei der Speicher (32) dazu angepasst ist, nur ein einziges Paket zu speichern, so dass nur dann ein Paket an den Zwischenknoten gesendet wird, wenn dort kein Paket gespeichert ist.

## Revendications

1. Procédé pour transmettre des paquets par l'intermédiaire d'un réseau multibond sans fil, comprenant les étapes consistant à :
a) établir une route multibond (10) entre un premier noeud (20) et un second noeud (40) en utilisant au moins un noeud intermédiaire (30₁ à 30₂), où les premier et second noeuds sont adaptés pour fonctionner comme un noeud source et/ou un noeud de destination et où chaque noeud intermédiaire (30₁ à 30₂) est adapté pour mettre en tampon un nombre prédéterminé N de paquets, et où chaque noeud intermédiaire comprend une seule interface radio (33) pour transmettre et recevoir des paquets via une voie de transmission sans fil ;
b) déterminer au niveau de chaque noeud ayant un paquet à transmettre si son noeud adjacent est un noeud intermédiaire (30₁ à 30₂) et, si oui, si ledit noeud intermédiaire (30₁ à 30₂) a stocké N paquets, où des noeuds adjacents sont connectés via une liaison radio respective ;
c) transmettre un paquet du noeud respectif ayant un paquet à envoyer à son noeud intermédiaire adjacent uniquement si le noeud intermédiaire respectif stocke moins de N paquets, **caractérisé par** les étapes consistant à :
diviser la route multibond établie (10) en une pluralité de groupes de trois noeuds adjacents où des groupes adjacents partagent un noeud commun et
allouer à chaque groupe de noeuds une de deux voies de transmission non chevauchantes différentes (A, B), où des groupes de noeuds adjacents se voient allouer des voies de transmission différentes (A, B) parmi les deux voies de transmission non chevauchantes différentes.

2. Procédé selon la revendication 1,
dans lequel le nombre prédéterminé N de paquets est un, de sorte qu'un paquet ne soit envoyé qu'à un noeud intermédiaire, s'il n'y a pas de paquet stocké.

3. Procédé selon la revendication 1 ou 2, dans lequel l'étape b) est effectuée en utilisant une procédure d'établissement de liaison sur la base d'un protocole MAC et dans lequel chaque paquet à envoyer a une taille fixe.

4. Procédé selon la revendication 3, dans lequel le protocole MAC supporte CSMA/CA.

5. Procédé selon l'une quelconque des revendications précédentes, dans lequel des paquets aller sont transmis du premier noeud (20) au second noeud (40) et des paquets retour sont transmis du second noeud (40) au premier noeud (20), le procédé comprenant les étapes de :
la transmission de paquets entre deux noeuds intermédiaires adjacents (30₁ à 30₂) est effectuée
i) si un des noeuds intermédiaires adjacents a un paquet aller à envoyer et l'autre noeud intermédiaire a un paquet retour à envoyer,
ii) si un des noeuds intermédiaires adjacents a un paquet aller à envoyer et l'autre noeud intermédiaire n'a pas de paquet stocké, ou
iii) si un des noeuds intermédiaires adjacents a un paquet retour à envoyer et l'autre noeud intermédiaire n'a pas de paquet stocké.

6. Procédé selon la revendication 5, dans lequel le temps de transaction pour échanger des paquets entre deux noeuds adjacents est constant.

7. Procédé selon la revendication 6, comprenant l'étape consistant à ajuster au niveau des premier et second noeuds (20, 40) la taille fixe respective de paquets à envoyer de sorte que le temps de transaction pour échanger des paquets entre deux noeuds adjacents soit maintenu constant.

8. Procédé selon l'une quelconque des revendications 1 à 7, dans lequel un noeud qui a envoyé un paquet s'abstient d'envoyer un autre paquet pendant un intervalle de temps prédéterminé.

9. Procédé selon la revendication 8, dans lequel l'intervalle de temps est établi sur le temps de transaction.

10. Réseau multibond sans fil pour transmettre des paquets sur au moins une route multibond (10), comprenant au moins un noeud source (20), au moins un noeud de destination (40) et une pluralité de noeuds intermédiaires (30₁ à 30₂), dans lequel un noeud source (20), au moins un noeud intermédiaire (30₁ à 30₂) et un noeud de destination (30) sont adaptés pour établir une route multibond (10), chaque noeud intermédiaire (30₁ à 30₂) comprenant :
- un stockage (32) pour stocker un nombre prédéterminé N de paquets,
- une seule interface radio (33) pour transmettre et recevoir des paquets via une voie de transmission sans fil ;
- des moyens (31) pour une communication avec un noeud intermédiaire adjacent pour déterminer si le noeud adjacent est en mesure de recevoir un paquet, où des noeuds adjacents sont connectés via une liaison radio respective ; et
- des moyens pour transmettre un paquet par l'intermédiaire de l'interface (33) au noeud intermédiaire adjacent uniquement si le noeud intermédiaire respectif stocke moins de N paquets, **caractérisé en ce que**
la route multibond (10) est divisée en une pluralité de groupes de trois noeuds adjacents où des groupes adjacents partagent un noeud commun et
chaque groupe de noeuds se voit allouer une de deux voies de transmission non chevauchantes différentes (A, B), où des groupes de noeuds adjacents se voient allouer des voies de transmission différentes (A, B) parmi les deux voies de transmission non chevauchantes différentes.

11. Réseau multibond sans fil selon la revendication 10, dans lequel le stockage (32) est adapté pour ne stocker qu'un seul paquet, de sorte qu'un paquet ne soit envoyé qu'au noeud intermédiaire, s'il n'y a pas de paquet stocké.
